# EUROPEAN PATENT APPLICATION

(11) **EP 4 738 485 A1**
(43) Date of publication of application: **06.05.2026**
(21) Application number: 25189281.6
(22) Date of filing: 14.07.2025
(51) Int. Cl.: H01M 8/0273, H01M 8/0276, H01M 8/0282

(54) **ELECTROCHEMICAL DEVICE**

(30) Priority: 05.11.2024 JP 2024193611
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: Fujimoto, Akira, Kawasaki-shi, Kanagawa (JP); Sawa, Fumio, Kawasaki-shi, Kanagawa (JP); Hiroshima, Satoshi, Kawasaki-shi, Kanagawa (JP)
(74) Representative: Hoffmann Eitle

(57) **Abstract**

To provide an electrochemical device that easily achieves a thickness reduction of its insulating sealing member and can have improved performance. In an electrochemical device of an embodiment, a cell stack has an insulating sealing member installed between a first separator and a second separator and configured to seal a gap between the first separator and the second separator and electrically insulate the first separator and the second separator from each other. The insulating sealing member has a metal layer and an insulation layer stacked on the metal layer in a stacking direction. The insulation layer contains a glass paste base material having a lower glass transition temperature than an operating temperature of the cell stack and a filler material having a higher glass transition temperature than the operating temperature of the cell stack, and the filler material is dispersed in the glass base material.

## Description

### FIELD

Embodiments of the present invention relate to an electrochemical device.

### BACKGROUND

An electrochemical device has an electrochemical cell including a fuel electrode, an oxygen electrode, and an electrolyte membrane sandwiched between them. Out of electrochemical cells, a solid oxide electrochemical cell whose electrolyte membrane is a solid oxide is usable as at least one of a solid oxide fuel cell (SOFC) and a solid oxide electrolysis cell (SOEC).

In the case where the solid oxide electrochemical cell is used as SOFC, for example, a fuel electrode gas (hydrogen, carbon monoxide, or the like) supplied to the fuel electrode and an oxygen electrode gas (oxygen, air, or the like) supplied to the oxygen electrode react through the electrolyte membrane under a high-temperature condition, resulting in the generation of electrical energy. On the other hand, in the case where the solid oxide electrochemical cell is used as SOEC, for example, a fuel electrode gas (water vapor) supplied to the fuel electrode is electrolyzed under a high-temperature condition, resulting in the production of hydrogen in the fuel electrode and the production of oxygen in the oxygen electrode.

Typically, an electrochemical device includes a cell stack in which a plurality of electrochemical cells are stacked. The cell stack has a plurality of separators besides the plurality of electrochemical cells, and the plurality of electrochemical cells are each sandwiched between the plurality of separators in the stacking direction. In the cell stack, for an increase in power output and the like, the plurality of electrochemical cells are electrically connected through the separators. Further, the cell stack is sandwiched between a pair of end plates in the stacking direction, and the pair of end plates is fastened using, for example, fastening members such as bolts.

The cell stack further has an insulating sealing member in each gap between the plurality of separators. The insulating sealing members are each, for example, a stack in which a metal layer and an insulation layer are stacked, and an inorganic material such as alumina or silica covers the metal layer to form the insulation layer. The insulating sealing members seal the gaps between the plurality of separators to prevent the leakage of the gases that are to be supplied to the electrochemical cells. In addition, the insulating sealing members electrically insulate the plurality of separators from each other to prevent the plurality of electrochemical cells from short-circuiting.

### SUMMARY OF THE INVENTION

In the electrochemical device, the insulating sealing members are required to have high mechanical strength so as not to plastically deform to break when given a compressive load to obtain sealability. The insulating sealing members are further required to have excellent heat resistance to prevent their thermal deformation at the operating temperature of the electrochemical cells (for example, 600°C to 1000°C). Further, the insulating sealing members are required to have excellent insulation properties to prevent the occurrence of a short circuit.

Besides, it is required to thin the insulating sealing members to meet a demand for the downsizing of the cell stack. However, conventionally, it has been sometimes difficult to obtain sufficient properties such as the insulation property while achieving the thinning of the insulating sealing members. For example, using gaskets as the insulating sealing members increases the thickness of the entire cell stack to make it difficult to downsize the cell stack. As a result, it is not easy to improve performance (power generation performance, electrolysis performance) while meeting the demand for the downsizing of the cell stack in the electrochemical device.

Under such circumstances, a problem to be solved by the present invention is to provide an electrochemical device that can have improved performance while easily achieving the thinning of its insulating sealing member.

### BRIEF DESCRIPTION OF THE DRAWINGS

FIG. 1A is a side sectional view schematically illustrating an electrochemical device 1 according to a first embodiment (xz plane).
FIG. 1B is a side sectional view schematically illustrating the electrochemical device 1 according to the first embodiment (yz plane).
FIG. 2A is a horizontal sectional view schematically illustrating the electrochemical device 1 according to the first embodiment (Z1-Z1 part in FIG. 1A).
FIG. 2B is a horizontal sectional view schematically illustrating the electrochemical device 1 according to the first embodiment (Z2-Z2 part in FIG. 1A).
FIG. 3A is a horizontal sectional view schematically illustrating the electrochemical device 1 according to the first embodiment (Z3-Z3 part in FIG. 1A).
FIG. 3B is a horizontal sectional view schematically illustrating the electrochemical device 1 according to the first embodiment (Z4-Z4 part in FIG. 1A).
FIG. 4A is a schematic view illustrating the configuration of an insulating sealing member 14a in the electrochemical device 1 according to the first embodiment (xz plane).
FIG. 4B is a schematic view illustrating the configuration of the insulating sealing member 14a in the electrochemical device 1 according to the first embodiment (X part in FIG. 4A).
FIG. 5 illustrates the relationship between the content ratio (mass%) of a filler material F 142 in an insulation layer 142 and the insulation property (dielectric breakdown voltage [V]), in the electrochemical device 1 according to the first embodiment.
FIG. 6A is a schematic view illustrating the configuration of an insulating sealing member 14a in an electrochemical device 1 according to a second embodiment (the same part as in FIG. 3A).
FIG. 6B is a schematic view illustrating the configuration of the insulating sealing member 14a in the electrochemical device 1 according to the second embodiment (the same part as in FIG. 4A).
FIG. 6C is a schematic view illustrating the configuration of the insulating sealing member 14a in the electrochemical device 1 according to the second embodiment (X part in FIG. 6B).

### DETAILED DESCRIPTION

An electrochemical device of an embodiment includes a cell stack including at least: electrochemical cells in each of which an electrolyte membrane is present between a fuel electrode and an oxygen electrode; and a first separator and a second separator which are formed of a metal material, the electrochemical cells being present between the first separator and the second separator in a staking direction, and the cell stack being configured such that a fuel electrode gas flows in the fuel electrodes, and an oxygen electrode gas flows in the oxygen electrodes. The cell stack has an insulating sealing member installed between the first separator and the second separator and configured to seal a gap between the first separator and the second separator and electrically insulate the first separator and the second separator from each other. The insulating sealing member has a metal layer and an insulation layer stacked on the metal layer in the stacking direction. The insulation layer includes a filler-containing part which contains a glass paste base material having a lower glass transition temperature than an operating temperature of the cell stack and a filler material having a higher glass transition temperature than the operating temperature of the cell stack, and in which the filler material is dispersed in the glass base material.

### <First Embodiment>

### [A] Configuration of Electrochemical Device 1

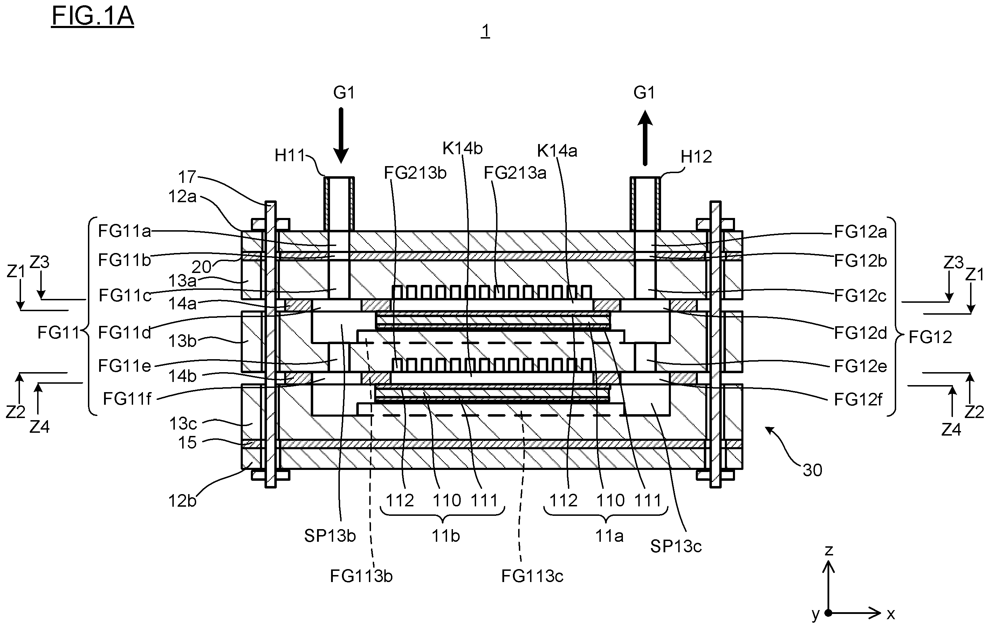

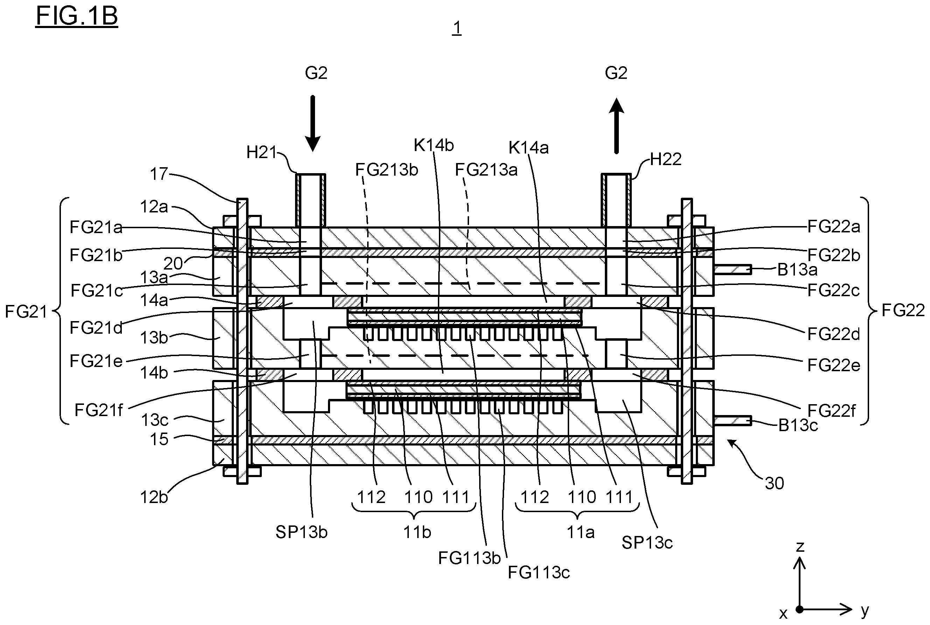

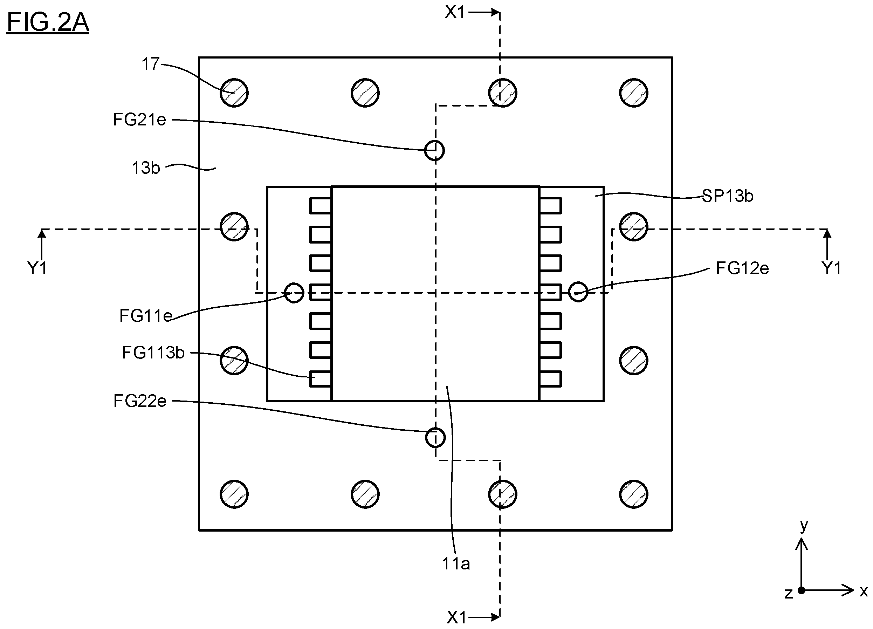

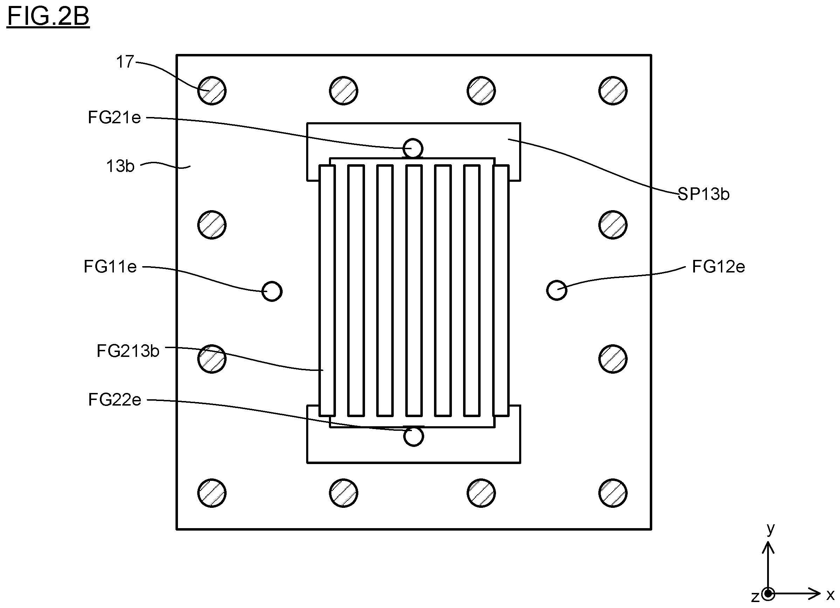

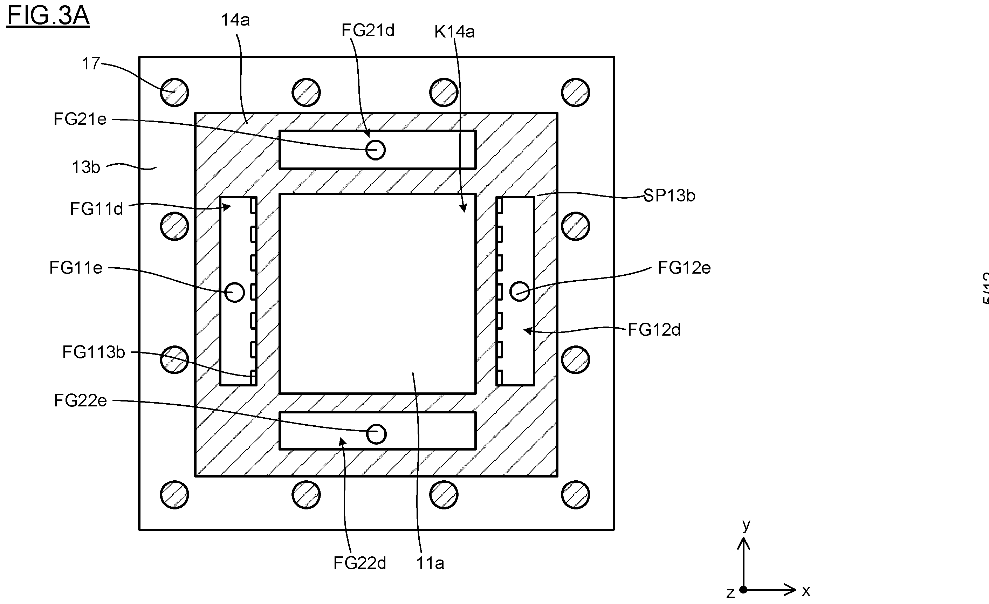

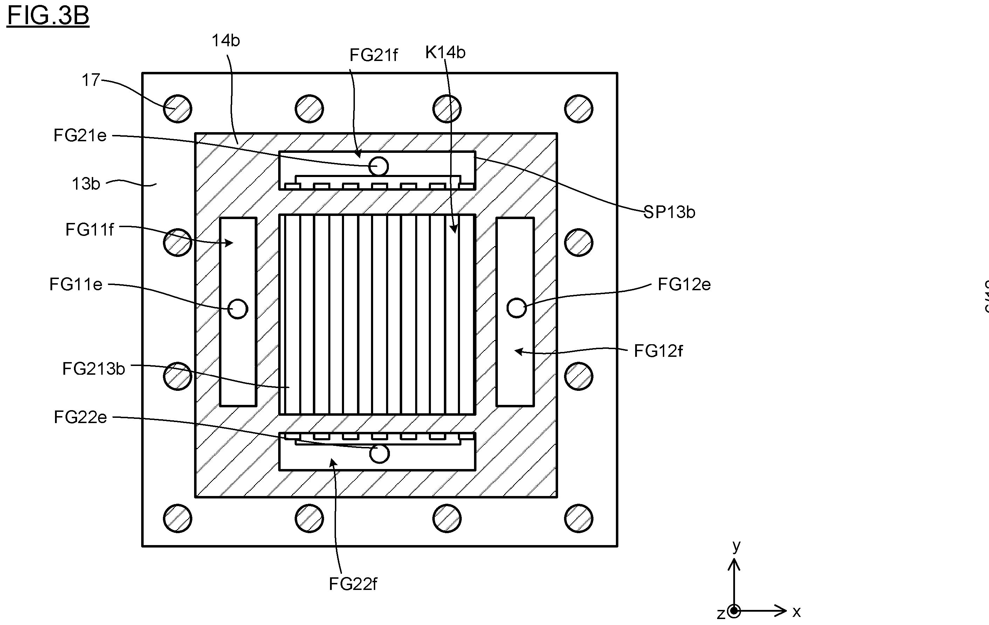

FIG. 1A and FIG. 1B are side sectional views schematically illustrating an electrochemical device 1 according to a first embodiment. FIG. 2A, FIG. 2B, FIG. 3A, and FIG. 3B are horizontal sectional views schematically illustrating the electrochemical device 1 according to the first embodiment.

In FIG. 1A, the vertical direction is a gravitational direction z, the lateral direction is a first horizontal direction x orthogonal to the gravitational direction z, and the direction perpendicular to the paper is a second horizontal direction y orthogonal to the gravitational direction z and the first horizontal direction x. In FIG. 1B, the vertical direction is the gravitational direction z, the lateral direction is the second horizontal direction y, and the direction perpendicular to the paper is the first horizontal direction x. FIG. 1A illustrates a plane defined by the gravitational direction z and the first horizontal direction x (xz plane). FIG. 1B illustrates a plane defined by the gravitational direction z and the second horizontal direction y (yz plane).

FIG. 2A, FIG. 2B, FIG. 3A, and FIG. 3B illustrate planes defined by the first horizontal direction x and the second horizontal direction y (xy planes). Here, FIG. 2A illustrates the Za-Za part in FIG. 1A, and FIG. 2B illustrates the Z2-Z2 part in FIG. 1A. FIG. 3A illustrates the Z3-Z3 part in FIG. 1A, and FIG. 3B illustrates the Z4-Z4 part in FIG. 1A. Note that FIG. 1A corresponds to the Y1-Y1 part in FIG. 2A, and FIG. 1B corresponds to the X1-X1 part in FIG. 2A.

In this embodiment, as illustrated in FIG. 1A and FIG. 1B, the electrochemical device 1 includes a cell stack 30 including electrochemical cells 11a, 11b, separators 13a, 13b, 13c, insulating sealing members 14a, 14b, an insulator 15, and an insulator 20, and these parts are stacked in a stacking direction (here, the gravitational direction z). The electrochemical device 1 further includes a pair of end plates 12a, 12b, and the pair of end plates 12a, 12b is installed to sandwich the cell stack 30 in the stacking direction. The pair of end plates 12a, 12b is fastened in the stacking direction using fastening members 17.

Further, in the electrochemical device 1, a fuel electrode gas supply channel FG11, a fuel electrode gas discharge channel FG12, an oxygen electrode gas supply channel FG21, and an oxygen electrode gas discharge channel FG22 are provided. The fuel electrode gas supply channel FG11 includes a plurality of fuel electrode gas inlet parts FG11a to FG11f. The fuel electrode gas discharge channel FG12 includes a plurality of fuel electrode gas outlet parts FG12a to FG12f. The oxygen electrode gas supply channel FG21 includes a plurality of oxygen electrode gas inlet parts FG21a to FG21f. The oxygen electrode gas discharge channel FG22 includes a plurality of oxygen electrode gas outlet parts FG22a to FG22f.

The electrochemical device 1 is configured such that a fuel electrode gas G1 (first electrode gas) is supplied to the electrochemical cells 11a, 11b through the fuel electrode gas supply channel FG11 and discharged from the electrochemical cells 11a, 11b through the fuel electrode gas discharge channel FG12. In addition, the electrochemical device 1 is configured such that an oxygen electrode gas G2 (second electrode gas) is supplied to the electrochemical cells 11a, 11b through the oxygen electrode gas supply channel FG21 and discharged from the electrochemical cells 11a, 11b through the oxygen electrode gas discharge channel FG22.

It should be noted that the stacking direction may be a direction other than the gravitational direction z though the case where the stacking direction is the gravitational direction z is taken as an example in this embodiment. Further, the numbers of the electrochemical cells 11a, 11b, the separators 13a, 13b, 13c, and the insulating sealing members 14a, 14b are not limited to the numbers in the drawings. In the planes orthogonal to the stacking direction, the arrangement of the fuel electrode gas supply channel FG11 and the fuel electrode gas discharge channel FG12 and the arrangement of the oxygen electrode gas supply channel FG21 and the oxygen electrode gas discharge channel FG22 are each symmetric, but may be asymmetric.

Hereinafter, details of the parts constituting the electrochemical device 1 will be described in sequence.

### [A-1] Electrochemical Cells 11a, 11b

The plurality of electrochemical cells 11a, 11b each have, for example, a quadrilateral flat plate shape and include an electrolyte membrane 110, a fuel electrode 111, and an oxygen electrode 112, with the electrolyte membrane 110 present between the fuel electrode 111 and the oxygen electrode 112 (see FIG. 1A and FIG. 1B).

Here, the plurality of electrochemical cells 11a, 11b are, for example, of a fuel electrode-supported type, and the electrolyte membrane 110 and the oxygen electrode 112 are stacked in sequence on the upper surface of the fuel electrode 111 functioning as a support. The plurality of electrochemical cells 11a, 11b each may have the fuel electrode 111 and the oxygen electrode 112 arranged in the reverse order, and may have a shape (circular shape or the like) other than the quadrilateral shape.

In each of the plurality of electrochemical cells 11a, 11b, the electrolyte membrane 110 is formed of an ion-conductive solid oxide (for example, yttria-stabilized zirconia (YSZ)) that conducts oxide ions (O²⁻). The electrolyte membrane 110 is formed to be denser than the fuel electrode 111 and the oxygen electrode 112. The fuel electrode 111 is formed of a porous electrical conductor (for example, cermet formed using nickel particles and particles of ceramic such as YSZ). The oxygen electrode 112 is formed of a porous electrical conductor (for example, perovskite oxide such as LaSrMnO₃).

### [A-2] Plurality of Separators 13a, 13b, 13c

The plurality of separators 13a, 13b, 13c each have, for example, a quadrilateral flat plate shape and is made of a metal material. Here, the separators 13a, 13b, 13c are each formed using a metal material that has conductivity at the operating temperature of the cell stack 30 (for example, 600°C to 1000°C). For example, the separators 13a, 13b, 13c are formed of a highly heat-resistant stainless steel material.

In the cell stack 30, each pair out of the plurality of separators 13a, 13b, 13c is installed to sandwich each of the plurality of electrochemical cells 11a, 11b.

In the cell stack 30, in each gap between the plurality of electrochemical cells 11a, 11b and the plurality of separators 13a, 13b, 13c, a current collector (not illustrated) is present, and the plurality of electrochemical cells 11a, 11b are electrically connected in series through the current collectors (not illustrated) and the separators 13a, 13b, 13c. The current collectors between the separator 13a and the electrochemical cell 11a and between the separator 13b and the electrochemical cell 11b are preferably formed of a conductive material excellent in oxidation resistance. Further, the current collectors between the separator 13b and the electrochemical cell 11a and between the separator 13c and the electrochemical cell 11b are preferably formed of a conductive material such as nickel. The current collectors may be omitted depending on the electrical connection state between the electrochemical cells 11a, 11b and the separators 13a, 13b, 13c.

Further, a busbar B13a and a busbar B13c are installed to be electrically connected to the separator 13a and the separator 13c respectively.

### [A-2-1] Separator 13a

Out of the plurality of separators 13a, 13b, 13c, the separator 13a (first separator) is installed on an oxygen electrode 112 side of the electrochemical cell 11a (see FIG. 1A and FIG. 1B).

In the separator 13a, the fuel electrode gas inlet part FG11c and the fuel electrode gas outlet part FG12c are formed as separator gas channels. The fuel electrode gas inlet part FG11c and the fuel electrode gas outlet part FG12c penetrate the separator 13a in the stacking direction (see FIG. 1A).

Further, in the separator 13a, the oxygen electrode gas inlet part FG21c and the oxygen electrode gas outlet part FG22c are formed as separator gas channels. The oxygen electrode gas inlet part FG21c and the oxygen electrode gas outlet part FG22c penetrate the separator 13a in the stacking direction (see FIG. 1B).

Besides, in the separator 13a, oxygen electrode gas channels FG213a are formed in its part facing the electrochemical cell 11a. The oxygen electrode gas channels FG213a are grooves extending in the direction (y direction) orthogonal to the stacking direction. The number of the oxygen electrode gas channels FG213a is plural, and the plurality of oxygen electrode gas channels FG213a are arranged apart from one another in the direction (x direction) orthogonal to the extension direction of the oxygen electrode gas channels FG213a (y direction) (see FIG.1A).

### [A-2-2] Separator 13b

Out of the plurality of separators 13a, 13b, 13c, the separator 13b (second separator) has a housing space SP13b. The housing space SP13b is formed in the center part of a separator 13a-side surface (here, upper surface) of the separator 13b. The housing space SP 13b is a recess whose planar shape is quadrilateral and houses the electrochemical cell 11a (see FIG. 1A and FIG. 1B).

Further, in the separator 13b, the fuel electrode gas inlet part FG11e and the fuel electrode gas outlet part FG12e are formed as separator gas channels. The fuel electrode gas inlet part FG11e and the fuel electrode gas outlet part FG12e penetrate the separator 13b in the stacking direction (see FIG. 1A).

In the separator 13b, fuel electrode gas channels FG113b are formed in its part facing the electrochemical cell 11a. The fuel electrode gas channels FG113b are grooves extending in the direction (x direction) orthogonal to the stacking direction. The number of the fuel electrode gas channels FG113b is plural, and the plurality of fuel electrode gas channels FG113b are arranged apart from one another in the direction (y direction) orthogonal to the extension direction of the fuel electrode gas channels FG113b (x direction) (see FIG. 1B and FIG. 2A).

Further, in the separator 13b, the oxygen electrode gas inlet part FG21e and the oxygen electrode gas outlet part FG22e are formed as separator gas channels. The oxygen electrode gas inlet part FG21e and the oxygen electrode gas outlet part FG22e penetrate the separator 13b in the stacking direction (see FIG. 1B).

Besides, in the separator 13b, oxygen electrode gas channels FG213b are formed in its part facing the electrochemical cell 11b. The oxygen electrode gas channels FG213b are grooves extending in the direction (y direction) orthogonal to the stacking direction. The number of the oxygen electrode gas channels FG213b is plural, and the plurality of oxygen electrode gas channels FG213b are arranged apart from one another in the direction (x direction) orthogonal to the extension direction of the oxygen electrode gas channels FG213b (y direction) (see FIG. 1A and FIG. 2B).

In this embodiment, in the separator 13b, the single fuel electrode gas inlet part FG11e, the single fuel electrode gas outlet part FG12e, the single oxygen electrode gas inlet part FG21e, and the single oxygen electrode gas outlet part FG22e are provided, and their cross sections along the plane (xy plane) orthogonal to the stacking direction are circular. In the separator 13b, the fuel electrode gas inlet part FG11e, the fuel electrode gas outlet part FG12e, the oxygen electrode gas inlet part FG21e, and the oxygen electrode gas outlet part FG22e are formed to be arranged on the same circle in the plane (xy plane) orthogonal to the stacking direction (see FIG. 2A and FIG. 2B).

In the separator 13a as well, the fuel electrode gas inlet part FG11c, the fuel electrode gas outlet part FG12c, the oxygen electrode gas inlet part FG21c, and the oxygen electrode gas outlet part FG22c are formed in the same arrangement, which is not illustrated, as the fuel electrode gas inlet part FG11e, the fuel electrode gas outlet part FG12e, the oxygen electrode gas inlet part FG21e, and the oxygen electrode gas outlet part FG22e respectively.

### [A-2-3] Separator 13c

Out of the plurality of separators 13a, 13b, 13c, the separator 13c has a housing space SP13c. In the separator 13c, the housing space SP13c is formed in the center part of its separator 13b-side surface (here, upper surface). The housing space SP13c is a recess whose planar shape is quadrilateral and houses the electrochemical cell 11b (see FIG. 1A and FIG. 1B).

In the separator 13c, fuel electrode gas channels FG113c are formed in its part facing the electrochemical cell 11b. The fuel electrode gas channels FG113c are grooves extending in the direction (x direction) orthogonal to the stacking direction. The number of the fuel electrode gas channels FG113c is plural, and the plurality of fuel electrode gas channels FG113c are arranged apart from one another in the direction (y direction) orthogonal to the extension direction of the fuel electrode gas channels FG113c (x direction) (see FIG. 1B).

### [A-3] Plurality of Insulating Sealing Members 14a, 14b

The plurality of insulating sealing members 14a, 14b are each present between each pair out of the plurality of separators 13a, 13b, 13c in the cell stack 30 (see FIG. 1A and FIG. 1B). The configuration of the plurality of insulating sealing members 14a, 14b will be described in detail later.

### [A-3-1] Insulating Sealing Member 14a

Out of the plurality of insulating sealing members 14a, 14b, the insulating sealing member 14a seals the gap between the separator 13a and the separator 13b and also electrically insulates the separator 13a and the separator 13b from each other.

The insulating sealing member 14a has, for example, a quadrilateral frame shape, and in its center part, an opening K14a is formed. The opening K14a of the insulating sealing member 14a is present between the oxygen electrode gas channels FG213a of the separator 13a and the oxygen electrode 112 of the electrochemical cell 11a in the stacking direction Here, the planar shape of the insulating sealing member 14a is smaller than that of the separator 13b, but may be the same as that of the separator 13b (see FIG. 1A, FIG. 1B, and FIG. 3A).

In the insulating sealing member 14a, the fuel electrode gas inlet part FG11d, the fuel electrode gas outlet part FG12d, the oxygen electrode gas inlet part FG21d, and the oxygen electrode gas outlet part FG22d are provided around the opening K14a. In the insulating sealing member 14a, the single fuel electrode gas inlet part FG11d, the single fuel electrode gas outlet part FG12d, the single oxygen electrode gas inlet part FG21d, and the single oxygen electrode gas outlet part FG22d are provided, and their cross sections along the plane (xy plane) orthogonal to the stacking direction is rectangular (see FIG. 3A).

The fuel electrode gas inlet part FG11d is present between the fuel electrode gas inlet part FG11c of the separator 13a and the housing space SP13b of the separator 13b in the stacking direction. The fuel electrode gas outlet part FG12d is present between the fuel electrode gas outlet part FG12c of the separator 13a and the housing space SP13b of the separator 13b in the stacking direction (see FIG. 1A).

The oxygen electrode gas inlet part FG21d is present between the oxygen electrode gas inlet part FG21d of the separator 13a and the housing space SP13b of the separator 13b in the stacking direction. The oxygen electrode gas outlet part FG22d is present between the oxygen electrode gas outlet part FG22d of the separator 13a and the housing space SP13b of the separator 13b in the stacking direction (see FIG. 1B).

### [A-3-2] Insulating Sealing Member 14b

Out of the plurality of insulating sealing members 14a, 14b, the insulating sealing member 14b seals the gap between the separator 13b and the separator 13c and also electrically insulates the separator 13b and the separator 13c from each other.

The insulating sealing member 14b, similarly to the insulating sealing member 14a, has, for example, a quadrilateral frame shape, and an opening K14b is formed in its center part. The opening K14b of the insulating sealing member 14b is present between the oxygen electrode gas channels FG213b of the separator 13b and the oxygen electrode 112 of the electrochemical cell 11b in the stacking direction. Here, the planar shape of the insulating sealing member 14b is smaller than that of the separator 13b but may be the same as that of the separator 13b (see FIG. 1A, FIG. 1B, and FIG. 3B).

In the insulating sealing member 14b, the fuel electrode gas inlet part FG11f, the fuel electrode gas outlet part FG12f, the oxygen electrode gas inlet part FG21f, and the oxygen electrode gas outlet part FG22f are provided around the opening K14b. In the insulating sealing member 14b, the single fuel electrode gas inlet part FG11f, the single fuel electrode gas outlet part FG12f, the single oxygen electrode gas inlet part FG21f, and the single oxygen electrode gas outlet part FG22f are provided, and their cross sections along the plane (xy plane) orthogonal to the stacking direction is rectangular (see FIG. 3B).

The fuel electrode gas inlet part FG11f is present between the fuel electrode gas inlet part FG11e of the separator 13b and the housing space SP13c of the separator 13c in the stacking direction. The fuel electrode gas outlet part FG12f is present between the fuel electrode gas outlet part FG12e of the separator 13b and the housing space SP13c of the separator 13c in the stacking direction (see FIG. 1A).

The oxygen electrode gas inlet part FG21f is present between the oxygen electrode gas inlet part FG21e of the separator 13b and the housing space SP13c of the separator 13c in the stacking direction. The oxygen electrode gas outlet part FG22f is present between the oxygen electrode gas outlet part FG22e of the separator 13b and the housing space SP13c of the separator 13c in the stacking direction (see FIG. 1B).

### [A-4] Pair of End Plates 12a, 12b

The pair of end plates 12a, 12b is installed to sandwich the cell stack 30 in the stacking direction (see FIG. 1A and FIG. 1B). The pair of end plates 12a, 12b each has, for example, a quadrilateral flat plate shape and is formed of a highly heat-resistant metal material such as a stainless steel material.

### [A-4-1] End Plate 12a

Out of the pair of end plates 12a, 12b, the end plate 12a (first end plate) is installed next to the separator 13a at an interval in the stacking direction (see FIG. 1A and FIG. 1B).

In the end plate 12a, the fuel electrode gas inlet part FG11a and the fuel electrode gas outlet part FG12a are formed as end plate gas channels. The fuel electrode gas inlet part FG11a and the fuel electrode gas outlet part FG12a penetrate the end plate 12a in the stacking direction (see FIG. 1A). Further, in the end plate 12a, the oxygen electrode gas inlet part FG21a and the oxygen electrode gas outlet part FG22a are formed as end plate gas channels. The oxygen electrode gas inlet part FG21a and the oxygen electrode gas outlet part FG22a penetrate the end plate 12a in the stacking direction (see FIG. 1B).

On a surface (upper surface in FIG. 1A and FIG. 1B), of the end plate 12a, opposite the side where the separator 13a is located, a fuel electrode gas supply pipe H11, a fuel electrode gas discharge pipe H12, an oxygen electrode gas supply pipe H21, and an oxygen electrode gas discharge pipe H22 are installed. The fuel electrode gas supply pipe H11 communicates with the fuel electrode gas inlet part FG11a. The fuel electrode gas discharge pipe H12 communicates with the fuel electrode gas outlet part FG12a. The oxygen electrode gas supply pipe H21 communicates with the oxygen electrode gas inlet part FG21a. The oxygen electrode gas discharge pipe H22 communicates with the oxygen electrode gas outlet part FG22a. In this embodiment, the fuel electrode gas supply pipe H11, the fuel electrode gas discharge pipe H12, the oxygen electrode gas supply pipe H21, and the oxygen electrode gas discharge pipe H22 are connected to the end plate 12a, with their pipe axes being along the stacking direction (see FIG. 1A and FIG. 1B).

### [A-4-2] End Plate 12b

Out of the pair of end plates 12a, 12b, the end plate 12b (second end plate) is installed next to the separator 13c at an interval in the stacking direction (see FIG. 1A and FIG. 1B).

### [A-5] Insulator 15

In the cell stack 30, the insulator 15 is provided on a surface of the separator 13c (lower surface of the separator 13c in FIG. 1A and FIG. 1B), opposite the surface where the electrochemical cell 11b is provided. That is, the insulator 15 is present between the separator 13c and the end plate 12b in the stacking direction. The insulator 15 is, for example, a quadrilateral plate-shaped body and is formed of an insulating material made of mineral such as mica or vermiculite.

### [A-6] Insulator 20

In the cell stack 30, the insulator 20 is provided on a surface of the separator 13a (upper surface of the separator 13a in FIG. 1A and FIG. 1B), opposite the surface where the electrochemical cell 11a is provided. That is, the insulator 20 is present between the separator 13a and the end plate 12a in the stacking direction. The insulator 20 is, for example, a quadrilateral plate-shaped body and is formed of an insulating material made of mineral such as mica or vermiculite.

In the insulator 20, the fuel electrode gas inlet part FG11b and the fuel electrode gas outlet part FG12b are formed. The fuel electrode gas inlet part FG11b and the fuel electrode gas outlet part FG12b penetrate the insulator 20 in the stacking direction (see FIG. 1A). Further, in the insulator 20, the oxygen electrode gas inlet part FG21b and the oxygen electrode gas outlet part FG22b are formed. The oxygen electrode gas inlet part FG21b and the oxygen electrode gas outlet part FG22b penetrate the insulator 20 in the stacking direction (see FIG. 1B).

### [A-7] Fastening members 17

The fastening members 17 are, for example, bolts and nuts, and shafts of the bolts are inserted into bolt holes penetrating the constituent parts of the electrochemical device 1 in the stacking direction to fasten them, and a load is applied in the stacking direction. The number of the bolt holes is plural, and the plurality of bolt holes are formed in, for example, peripheral parts of the constituent parts. Instead, for the fastening, a pressing mechanism may be used to press the pair of end plates 12a, 12b toward each other.

### [B] Operation of Electrochemical Device 1

The operation of the electrochemical device 1 will be described. Here, a case where the electrochemical cells 11a, 11b forming the electrochemical device 1 are used as SOFCs will be described.

In the case where the electrochemical cells 11a, 11b are used as SOFCs, under a high-temperature environment, the fuel electrodes 111 forming the electrochemical cells 11a, 11b are supplied with, for example, a hydrogen-containing fuel electrode gas G1, which is a fuel gas, and the oxygen electrodes 112 forming the electrochemical cells 11a, 11b are supplied with, for example, an oxygen- (air-)containing oxygen electrode gas G2, which is an oxidizing gas (see FIG. 1A and FIG. 1B).

Specifically, the fuel electrode gas G1 is introduced into the fuel electrode gas supply channel FG11 from the fuel electrode gas supply pipe H11. After flowing in the plurality of fuel electrode gas inlet parts FG11a, FG11b, FG11c, FG11d in sequence in the fuel electrode gas supply channel FG11, the fuel electrode gas G1 is introduced into the housing space SP13b of the separator 13b and supplied to the fuel electrode 111 of the electrochemical cell 11a through the fuel electrode gas channels FG113b. Further, after flowing in the plurality of fuel electrode gas inlet parts FG11a, FG11b, FG11c, FG11d, FG11e, FG11f in sequence in the fuel electrode gas supply channel FG11, the fuel electrode gas G1 is introduced into the housing space SP13c of the separator 13c and supplied to the fuel electrode 111 of the electrochemical cell 11b through the fuel electrode gas channels FG113c (see FIG. 1A).

The oxygen electrode gas G2 is introduced into the oxygen electrode gas supply channel FG21 from the oxygen electrode gas supply pipe H21. After flowing in the plurality of oxygen electrode gas inlet parts FG21a, FG21b, FG21c in sequence in the oxygen electrode gas supply channel FG21, the oxygen electrode gas G2 is supplied to the oxygen electrode 112 of the electrochemical cell 11a through the oxygen electrode gas channels FG213a. Further, after flowing in the plurality of oxygen electrode gas inlet parts FG21a, FG21b, FG21c, FG21d, FG21e in sequence in the oxygen electrode gas supply channel FG21, the oxygen electrode gas G2 is supplied to the oxygen electrode 112 of the electrochemical cell 11b through the oxygen electrode gas channels FG213b (see FIG. 1B).

Consequently, in the plurality of electrochemical cells 11a, 11b, oxygen (O₂) receives electrons, resulting in the production of oxide ions (O²⁻) in the oxygen electrodes 112. Then, the oxide ions (O²⁻) move in the electrolyte membranes 110 from the oxygen electrode 112 sides to the fuel electrode 111 sides. In the fuel electrodes 111, the oxide ions (O²⁻) react with hydrogen (H₂), resulting in the production of water, and electrons of the oxide ions (O²⁻) are released. The electrons released from the oxide ions (O²⁻) move to the oxygen electrodes 112 from the fuel electrodes 111 through external loads. In this manner, power is generated in each of the plurality of electrochemical cells 11a, 11b. The powers generated in the plurality of electrochemical cells 11a, 11b are output through the busbar B13a and the busbar B13c respectively (see FIG. 1A and FIG. 1B).

Thereafter, the fuel electrode gas G1 flows from the fuel electrodes 111 of the plurality of electrochemical cells 11a, 11b to the fuel electrode gas discharge pipe H12 through the fuel electrode gas discharge channel FG12 and is discharged out. In addition, the oxygen electrode gas G2 flows from the oxygen electrodes 112 of the plurality of electrochemical cells 11a, 11b to the oxygen electrode gas discharge pipe H22 through the oxygen electrode gas discharge channel FG22 and is discharged out.

Specifically, after flowing to the housing space SP13b of the separator 13b from the electrochemical cell 11a, the fuel electrode gas G1 flows in the plurality of fuel electrode gas outlet parts FG12d, FG12c, FG12b, FG12a in sequence in the fuel electrode gas discharge channel FG12 and is discharged from the fuel electrode gas discharge pipe H12. Further, after flowing to the housing space SP13c of the separator 13c from the electrochemical cell 11b, the fuel electrode gas G1 flows in the plurality of fuel electrode gas outlet parts FG12f, FG12e, FG12d, FG12c, FG12b, FG12a in sequence in the fuel electrode gas discharge channel FG12 and is discharged from the fuel electrode gas discharge pipe H12 (see FIG. 1A).

After flowing to the housing space SP13b of the separator 13b from the electrochemical cell 11a, the oxygen electrode gas G2 flows in the plurality of oxygen electrode gas outlet parts FG22d, FG22c, FG22b, FG22a in sequence in the oxygen electrode gas discharge channel FG22 and is discharged from the oxygen electrode gas discharge pipe H22. After flowing to the housing space SP13c of the separator 13c from the electrochemical cell 11b, the oxygen electrode gas G2 flows in the plurality of oxygen electrode gas outlet parts FG22f, FG22e, FG22d, FG22c, FG22b, FG22a in sequence in the oxygen electrode gas discharge channel FG22 and is discharged from the oxygen electrode gas discharge pipe H22 (see FIB. 1B).

As has been described, the electrochemical device 1 is capable of not only operating using the plurality of electrochemical cells 11a, 11b as SOFCs but also operating using the plurality of electrochemical cells 11a, 11b as SOECs. In the case where the plurality of electrochemical cells 11a, 11b are used as SOECs, for example, the fuel electrode gas G1 containing water vapor is supplied to the fuel electrodes 111 and the water vapor is electrolyzed, resulting in the production of hydrogen in the fuel electrodes 111 and the production of oxygen in the oxygen electrodes 112. At the time of the execution of the electrolysis, power is supplied to the plurality of electrochemical cells 11a, 11b through the busbar B13a and the busbar B 13c respectively (see FIG. 1A and FIG. 1B).

### [C] Detailed Configuration of Insulating Sealing Member 14a

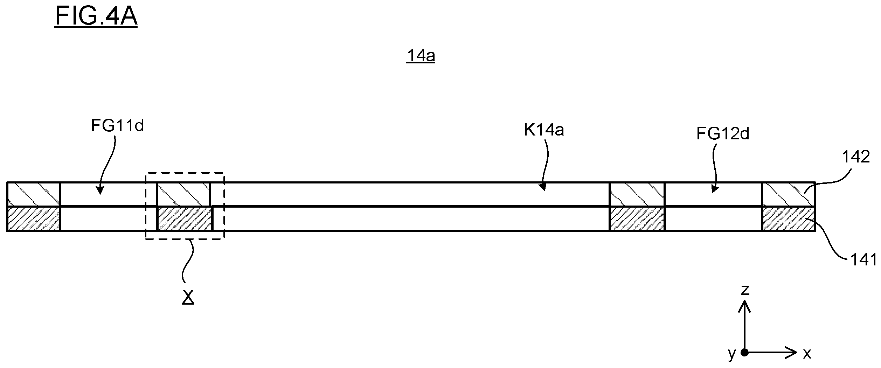

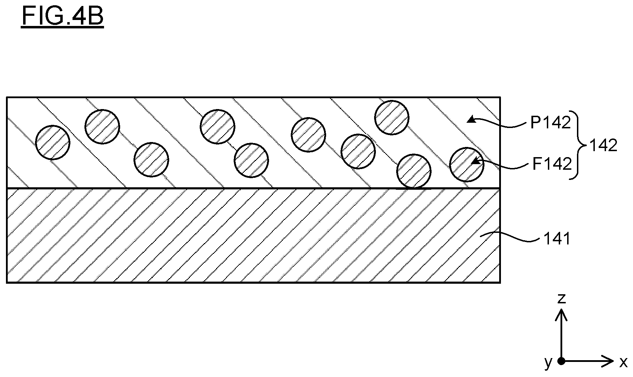

FIG. 4A and FIG. 4B are schematic views illustrating the configuration of the insulating sealing member 14a in the electrochemical device 1 according to the first embodiment.

FIG. 4A is an enlarged view of the same section (xz plane) as that in FIG. 1A. FIG. 4B illustrates the X part in FIG. 4A in a more enlarged manner. Note that a description of the insulating sealing member 14b, which has the same configuration as that of the insulating sealing member 14a, will be omitted.

As illustrated in FIG. 4A, the insulating sealing member 14a of this embodiment has a metal layer 141 and an insulation layer 142.

### [C-1] Metal Layer 141

The metal layer 141 is, for example, a plate-shaped body and formed of a metal material. The metal layer 141 is formed of a material having mechanical strength high enough to avoid plastic deformation and fracture at the operating temperature (for example, 600°C to 1000°C) of the cell stack 30 (see FIG. 1A and so on). The metal layer 141 is formed of, for example, a highly heat-resistant stainless steel material similarly to the separator 13a, 13b, 13c.

### [C-2] Insulation Layer 142

The insulation layer 142 is stacked on the metal layer 141 in the stacking direction (here, the gravitational direction z) of the cell stack 30 (see FIG. 1A and so on). The insulation layer 142 is formed using an insulating material.

In this embodiment, the insulation layer 142 contains a glass paste base material P142 and a filler material F142 as illustrated in FIG. 4B. To form the insulation layer 142, for example, the surface of the metal layer 141 is coated with a paste coating solution in which the filler material F142 is dispersed in the glass paste base material P142, followed by heating at 100 to 200°C to evaporate a solvent. For the coating, screen printing, a dispenser, or the like is used, for instance.

The insulation layer 142 is formed with a thickness of, for example, not less than 50 µm nor more than 60 µm.

### [C-2-1] Glass Paste Base Material P142

Here, the glass paste base material P142 is a base material formed of a glass material whose glass transition temperature (Tg) is lower than the operating temperature of the cell stack 30. The material of the glass paste base material P142 may be a glass powder as long as it satisfies the glass transition temperature lower than the operating temperature and a desired coefficient of thermal expansion, and is, for example, glass powder GM31107 manufactured by SCHOTT AG.

### [C-2-2] Filler Material F142

The filler material F142 is a powder formed of a material whose glass transition temperature (Tg) is higher than the operating temperature of the cell stack 30. In the insulation layer 142, the filler material F142 is dispersed in the glass paste base material P142 which is a dispersion medium. That is, the insulation layer 142 is constituted by a filler-containing part in which the filler material F142 is dispersed in the glass paste base material P142. The material of the glass paste base material P142 is, for example, an inorganic material such as alumina, boron nitride, or magnesium oxide.

### [C-2-3] Function of Insulation Layer 142

As described above, in the insulation layer 142 of this embodiment, the glass paste base material P142 has a lower glass transition temperature (Tg) than the operating temperature of the cell stack 30, and the filler material F142 has a higher glass transition temperature (Tg) than the operating temperature of the cell stack 30. Therefore, in the insulation layer 142 of this embodiment, at the operating temperature of the cell stack 30, the glass paste base material P142 flows while the filler material F142 does not flow to retain its shape.

Therefore, in this embodiment, when the cell stack 30 operates using the electrochemical cells 11a, 11b as SOFCs or SOECs, the separator 13a in contact with the insulating sealing member 14a and the metal layer 141 forming the insulating sealing member 14a are kept electrically insulated from each other by the filler material F142. As a result, in this embodiment, it is possible to easily reduce the occurrence of a short circuit, enabling an improvement in the performance of the electrochemical device. Further, since the insulation layer 142 is composed of the glass paste base material P142 and the filler material F142, it is possible to easily thin the insulating sealing member 14a, enabling the downsizing of the cell stack 30. Further, in this embodiment, a cost reduction is possible.

### [C-2-4] Average Particle Size of Filler Material F142

In the insulation layer 142, the filler material F 142 preferably has an average particle size within a range of not less than 7 µm nor more than 13 µm.

If the average particle size is less than the lower limit value of the above-mentioned range, it is not possible to fully satisfy the insulation distance between the metal layers 141, and thus there may occur a problem of not achieving the desired insulation property. If the average particle size is larger than the upper limit value of the above-mentioned range, the glass paste base material P142 does not fully permeate the vicinity of the filler material F 142, and thus there may occur a problem of not achieving the desired sealing property.

### [C-2-5] Content Ratio of Filler Material F142

In the insulation layer 142 constituted by the filler-containing part, the content ratio of the filler material F 142 is preferably within a range of not less than 10 mass% nor more than 20 mass%. If the content ratio is less than the lower limit value of the above-mentioned range, the insulating sealing member 14a does not fully exhibit the insulation property, which may lead to an increased possibility of the occurrence of a short circuit. Further, if the content ratio exceeds the upper limit value of the above-mentioned range, the viscosity of the paste coating solution in which the filler material F142 is dispersed in the glass paste base material P142 becomes extremely high, which may make it difficult to uniformly apply the paste coating solution on the surface, of the metal layer 141, where to form the insulation layer 142.

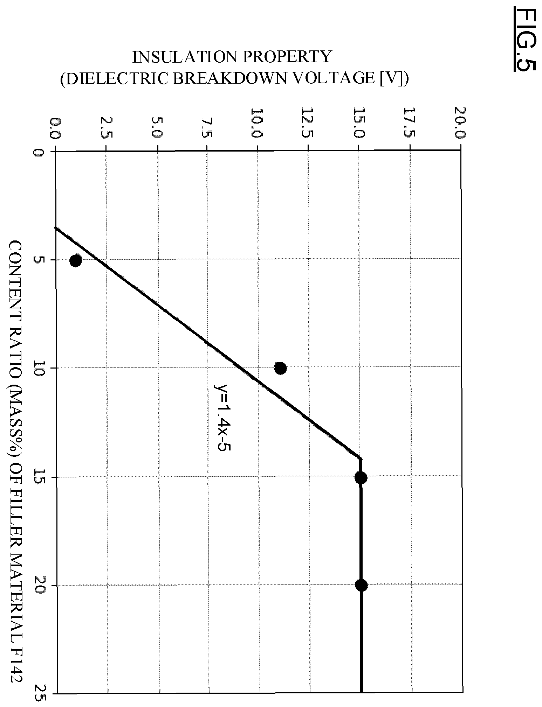

FIG. 5 illustrates the relationship between the content ratio (mass%) (= x in the approximate equation) of the filler material F142 in the insulation layer 142 and the insulation property (dielectric breakdown voltage [V]) (= y in the approximate equation), in the electrochemical device 1 according to the first embodiment.

FIG. 5 illustrates the result obtained when the insulation layer 142 is fabricated under the following conditions.
glass paste base material P142
   - material: glass powder, binder resin
   - glass transition temperature: 533°C (glass powder)
filler material F142
   - material: alumina
   - glass transition temperature: It does not have a glass transition temperature because it is a crystalline substance. Its melting point is typically about 2000°C.
   - average particle size: 7 to 13 µm

Further, in FIG. 5, the insulation property (dielectric breakdown voltage [V]) is a voltage value obtained when a short circuit occurs under the condition that a stack of the two metal layers 141 coated with the paste coating solution is loaded with a predetermined weight, this is used as a specimen, and after the temperature is increased to 700°C, a direct-current voltage is applied at a 1 V/s rate from one of the metal layers 141. The approximate equation illustrated in FIG. 5 is found using data when the content ratio (mass%) of the filler material F142 is 5 mass%, 10 mass%, and 15 mass%.

As is understood from FIG. 5, when the content ratio of the filler material F142 is 7.5 mass% or more, the dielectric breakdown voltage [V] indicating the insulation property is 5 V or more. Therefore, the insulating sealing member 14a fully exhibits the insulation property, making it possible to reduce the possibility of the occurrence of a short circuit.

### <Second Embodiment>

### [A] Detailed Configuration of Insulating Sealing Member 14a

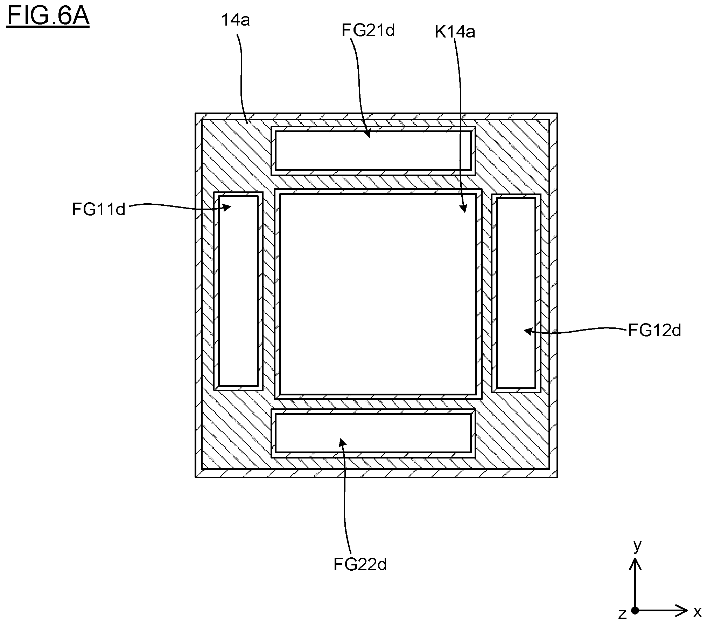

FIG. 6A to FIG. 6C are schematic views illustrating the configuration of an insulating sealing member 14a in an electrochemical device 1 according to a second embodiment.

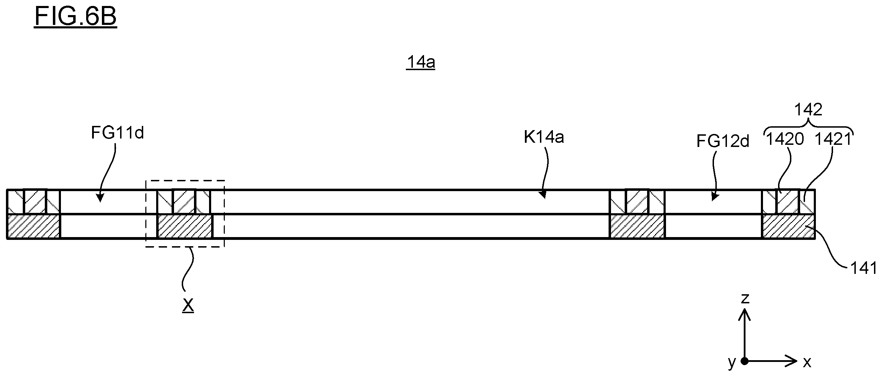

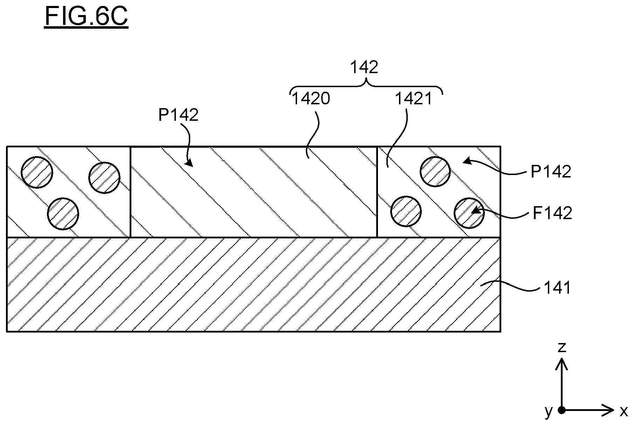

FIG. 6A illustrates the same part as that in FIG. 3A. FIG. 6B illustrates the same part as that in FIG. 4A. FIG. 6C illustrates the X part in FIG. 6B in a more enlarged manner.

As illustrated in the drawings, in this embodiment, the insulating sealing member 14a has a metal layer 141 and an insulation layer 142 as in the first embodiment (see FIG. 4). However, the insulating sealing member 14a of this embodiment is different from that of the first embodiment (see FIG. 4) in the configuration of the insulation layer 142. Except for this point and relevant points, it is the same as in the first embodiment. Therefore, in this embodiment, a description of redundant items will be omitted when appropriate.

In the insulating sealing member 14a of this embodiment, the insulation layer 142 includes a filler-free part 1420 and a filler-containing part 1421.

The filler-free part 1420 is constituted by a glass paste base material P142. The filler-free part 1420 does not contain the filler material F142 unlike the filler-containing part 1421.

The filler-containing part 1421 contains the glass paste base material P142 and the filler material F 142, and the filler material F 142 is dispersed in the glass paste base material P142.

The filler-containing part 1421 of this embodiment is provided to cover an edge portion located in the periphery of the metal layer 141, in the surface, of the metal layer 141, where the insulation layer 142 is stacked (the upper surface in the drawing).

The filler-containing part 1421 of this embodiment is provided to cover edge portions located in the peripheries of the openings (K14a, FG11d, FG12d, FG21d, FG22d) penetrating the insulating sealing member 14a in the stacking direction (z direction in the drawings). Specifically, the filler-containing part 1421 is provided to cover the edge portion located in the periphery of the opening K14a, in the surface, of the metal layer 142, on which the insulation layer 142 is stacked (the upper surface in the drawings). Further, the filler-containing part 1421 is provided to cover the edge portions located in the peripheries of the fuel electrode gas inlet part FG11d, the fuel electrode gas outlet part FG12d, the oxygen electrode gas inlet part FG21d, and the oxygen electrode gas outlet part FG22d, in the surface, of the metal layer 142, on which the insulation layer 142 is stacked (the upper surface in the drawings). The filler-containing part 1421 is formed to cover, for example, 10 mm ranges from the end surfaces of the edge portions.

The filler-free part 1420 is provided to cover a portion where the filler-containing part 1421 is not provided, in the surface, of the metal layer 141, on which the insulation layer 142 is stacked (the upper surface in the drawing).

### [B] Function of Insulation Layer 142

A short circuit between the metal layer 141 forming the insulating sealing member 14a and the separator 13a in contact with the insulating sealing member 14a often occurs due to an increased electric field caused by the approach of the edge portion of the metal layer 141 to the edge portion of the separator 13a when the metal layer 141 becomes not parallel and inclined with respect to the separator 13a.

In the filler-containing part 1421 of this embodiment, the glass paste base material P142 has a lower glass transition temperature (Tg) than the operating temperature of the cell stack 30, and the filler material F 142 has a higher glass transition temperature (Tg) than the operating temperature of the cell stack 30. Therefore, in the filler-containing part 1421 of the insulation layer 142 of this embodiment, at the operating temperature of the cell stack 30, the glass paste base material P142 flows while the filler material F 142 does not flow and retains its shape.

Therefore, in this embodiment, when the cell stack 30 operates using the electrochemical cells 11a, 11b as SOFCs or SOECs, the separator 13a in contact with the insulating sealing member 14a and the metal layer 141 forming the insulating sealing member 14a are kept electrically insulated from each other by the filler material F142 in the filler-containing part 1421. As a result, in this embodiment, it is possible to easily reduce the occurrence of a short circuit, enabling an improvement in the performance of the electrochemical device as in the first embodiment. Further, in the insulating sealing member 14a of this embodiment, the amount of the filler material F142 used can be made smaller than in the above-described embodiment, and thus a cost reduction is achieved.

### <Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

1: electrochemical device, 11a: electrochemical cell, 11b: electrochemical cell, 12a: end plate, 12b: end plate, 13a: separator, 13b: separator, 13c: separator, 14a: insulating sealing member, 14b: insulating sealing member, 15: insulator, 17: fastening member, 20: insulator, 30: cell stack, 110: electrolyte membrane, 111: fuel electrode, 112: oxygen electrode, 141: metal layer, 142: insulation layer, 1420: filler-free part, 1421: filler-containing part, F142: filler material, FG11: fuel electrode gas supply channel, FG113b: fuel electrode gas channel, FG113c: fuel electrode gas channel, FG11a: fuel electrode gas inlet part, FG11b: fuel electrode gas inlet part, FG11c: fuel electrode gas inlet part, FG11d: fuel electrode gas inlet part: FG11e: fuel electrode gas inlet part, FG11f: fuel electrode gas inlet part, FG12a: fuel electrode gas outlet part, FG12b: fuel electrode gas outlet part, F12c: fuel electrode gas outlet part, FG12d: fuel electrode gas outlet part, FG12e: fuel electrode gas outlet part, FG12f: fuel electrode gas outlet part, FG21: oxygen electrode gas supply channel, FG213a: oxygen electrode gas channel, FG213b: oxygen electrode gas channel, FG21a: oxygen electrode gas inlet part, FG21b: oxygen electrode gas inlet part, FG21c: oxygen electrode gas inlet part, F21d: oxygen electrode gas inlet part, FG21e: oxygen electrode gas inlet part, FG21f: oxygen electrode gas inlet part, FG22: oxygen electrode gas discharge channel, FG22a: oxygen electrode gas outlet part, FG22b: oxygen electrode gas outlet part, FG22c: oxygen electrode gas outlet part, FG22d: oxygen electrode gas outlet part, FG22e: oxygen electrode gas outlet part, FG22f: oxygen electrode gas outlet part, G1: fuel electrode gas, G2:oxygen electrode gas, H11: fuel electrode gas supply pipe, H12: fuel electrode gas discharge pipe, H21: oxygen electrode gas supply pipe, H22: oxygen electrode gas discharge pipe, K14a: opening, K14b: opening, P142: glass paste base material, SP13b: housing space, SP13c: housing space

## Claims

1. An electrochemical device comprising
a cell stack including at least: electrochemical cells in each of which an electrolyte membrane is present between a fuel electrode and an oxygen electrode; and a first separator and a second separator which are formed of a metal material, the electrochemical cells being present between the first separator and the second separator in a staking direction, and the cell stack being configured such that a fuel electrode gas flows in the fuel electrodes, and an oxygen electrode gas flows in the oxygen electrodes,
wherein the cell stack has an insulating sealing member installed between the first separator and the second separator and configured to seal a gap between the first separator and the second separator and electrically insulate the first separator and the second separator from each other,
wherein the insulating sealing member has:
a metal layer; and
an insulation layer stacked on the metal layer in the stacking direction, and
wherein the insulation layer includes a filler-containing part which contains a glass paste base material having a lower glass transition temperature than an operating temperature of the cell stack and a filler material having a higher glass transition temperature than the operating temperature of the cell stack, and in which the filler material is dispersed in the glass base material.

2. The electrochemical device according to claim 1,
wherein the insulating sealing member includes an opening penetrating in the stacking direction,
wherein the insulation layer further includes a filler-free part constituted by the glass paste base material,
wherein the filler-containing part is provided to cover at least one of an edge portion located in a periphery of the metal layer and an edge portion located in a periphery of the opening, in a surface, of the metal layer, on which the insulation layer is stacked, and
wherein the filler-free part is provided to cover a portion where the filler-containing part is not provided, in the surface, of the metal layer, on which the insulation layer is stacked.

3. The electrochemical device according to claim 1,
wherein the filler material has an average particle size within a range of not less than 7 µm nor more than 13 µm.

4. The electrochemical device according to claim 1,
wherein, in the insulation layer, a content ratio of the filler material in the filler-containing part is within a range of not less than 5 mass% nor more than 20 mass%.
